# DEMANDE DE BREVET EUROPEEN

(11) **EP 1 295 526 A1**
(43) Date de publication de la demande: **26.03.2003**
(21) Numéro de dépôt: 02292317.1
(22) Date de dépôt: 20.09.2002
(51) Int. Cl.: A01G 27/02

(54) **Jardinière à deux étages**

(30) Priorité: 21.09.2001 FR 0112190
(71) Demandeur: Petit Jardin (S.A.R.L.), 75011 Paris (FR)
(72) Inventeur: Roussel, Alain, 93600 Aulnay-sous-bois (FR)
(74) Mandataire: Eidelsberg, Victor Albert

(57) **Abrégé**

Dans cette jardinière qui comprend un deuxième étage (E₂) destiné à contenir la terre (T) de culture du végétal et le végétal et, un premier étage (E₁) juste en dessous du deuxième étage (E₂) et destiné à recevoir l'eau drainée en excédent du deuxième étage (E₂) et un orifice (6) constamment ouvert ménagé dans la paroi de la jardinière définissant le premier étage (E₁), de manière à ce que de l'eau s'y trouvant ne puisse pas remonter dans le deuxième étage (E₂) autrement que par le système racinaire de la plante, les éléments qui la constituent sont de dépouille.

## Description

L'invention concerne la mise en place, la culture et l'entretien de végétaux, en contenant hors sol et en atmosphère libre.

On désigne par :
- sol, la terre ou autre support de culture,
- et atmosphère libre, le climat ambiant.

On connaît déjà les difficultés liées à la mise en place, à la culture et à l'entretien de végétaux en sol et en atmosphère libre (jardins, parcs, champs, forêts) qui sont accentuées lorsque l'on utilise un contenant. Adaptation des supports de culture, de l'irrigation et de l'entretien à chaque espèce végétale. Capacité de drainage comme dans une culture en sol. Renouvellement des plantations. On désigne par contenant, tout support de culture qui permet de différencier une culture en sol d'un autre support de culture. Il peut s'agir de pot seul, de jardinières, de balconnières, de bacs, de suspensions à usage particulier ou professionnel.

On désigne dans le présent mémoire, ce type de contenant, par « jardinière ».

On connaît déjà des jardinières dans lesquelles :
- il est prévu une réserve d'eau en dessous du végétal que l'on souhaite cultiver. Cette réserve est constituée d'excédents de l'eau d'arrosage et/ou de pluie, drainée dans le fond du bac, qui n'a pas été absorbée par la terre (ou un autre support de culture) et/ou le système racinaire du végétal. Cette dernière est soit :

- intégré au bac principal constituant la jardinière,
- réalisée sous la forme d'une soucoupe entourant le fond perforé (ou à perforer) du bac.

Dans tous les cas, il n'existe aucun moyen qui permet dans la même jardinière :
- de faciliter la mise en place et le retrait des végétaux,
- d'adapter le support de culture au végétal cultivé, de différencier les entretiens (arrosage, engrais),
- de corriger les entretiens en fonction de l'influence directe des conditions climatiques,
- de limiter la remontée de l'eau dans la terre, ou autre support de culture, au seul besoin du système racinaire du végétal dans laquelle il se développe.

En effet, dans le premier cas du paragraphe 5, on prévoit, général, des moyens permettant de réintroduire l'eau dans la terre dans laquelle pousse le végétal, notamment sous la forme de mèches et/ou d'une grille ajourée et d'une manière générale tout moyen permettant le passage de cette eau dans la terre.

Ces moyens sont dans certains cas :
- compétés d'un système d'ouverture, sur la paroi latérale, ou dans un angle de la jardinière permettant le versage de l'eau d'arrosage, en dessous du végétal que l'on souhaite cultiver.
- complétés d'un indicateur de niveau de remplissage de cette partie inférieure, constituée par une fenêtre aménagée dans une paroi latérale de la jardinière et par une pièce en matériaux transparents translucide ou de la même couleur que la jardinière, fixe ou amovible . Cette pièce ayant pour objectif visible de clore cette fenêtre de manière étanche et d'avoir une visibilité sur le niveau de l'eau.

Dans le deuxième cas, du paragraphe 5, l'eau dans la soucoupe peut par capillarité remonter au niveau de la terre par l'intermédiaire de trous réalisés à cet effet dans la jardinière ou par une grille.

Dans un troisième, l'eau de la réserve peut remonter au niveau de la terre compte tenu des propriétés poreuses de certains matériaux (matières minérales, béton et terre cuite notamment), cependant, ce type de système ne vise qu'à rafraîchir les parois, compte tenu de l'imperméabilisation des parois extérieures et à maintenir, en milieu humide la terre (ou autre support de culture).

On comprend que dans tous ces cas c'est la terre qui dans un premier temps absorbe l'eau et que dans un deuxième temps le système racinaire de la plante à son contact va puiser l'eau. L'inconvénient majeur est que tant que la terre n'est pas saturée en eau, un milieu humide sera en contact avec les racines de la plante. Cette situation est particulièrement néfaste à la culture du végétal dans la mesure où les racines vont peut à peut être asphyxiées par excès d'eau ce qui entraîne le dépérissement du végétal.

Au DE - A 44 31 436 A1, on décrit une jardinière comprenant un pot suspendu dans un boîtier qui est placé dans un bac à eau de façon à ce que de l'eau soit en dessous du fond du pot. Des trous sont prévus au-dessus du niveau de l'eau et créent une couche d'air qui favorise la croissance des plantes. Cette jardinière est constituée de pièces de forme compliquée.

On désigne par l'expression « terre» également du mélange terreux, du sable, du terreau et d'une manière générale tout milieu où un végétal peut pousser.

L'invention a, par conséquent, pour objet une jardinière à deux étages, plus simple à fabriquer telle que définie à la revendication 1. Les sous revendications en donnent des perfectionnements. Il est ainsi prévu :
- Un deuxième étage destiné à contenir la terre de culture du végétal et le ou les végétaux. L'arrosage des végétaux est effectué par cet étage. Un premier étage juste en dessous du deuxième étage destiné à recevoir l'eau drainée en excédent du deuxième étage et dans lequel au moins un orifice constamment ouvert est ménagé dans la paroi du bac définissant le premier étage de manière à ce que de l'eau s'y trouvant ne puisse remonter dans le deuxième étage et entrer en contact avec la terre autrement que par le système racinaire du végétal.
- On peut ainsi, suivant l'invention, fabriquer les deux pièces de la jardinière en matière plastique, par simple moulage, puisqu'elles peuvent être toutes les deux de dépouille, contrairement aux pièces de la jardinière du DE 44 31 436 A1 qui ne l'étaient pas. Le stockage et le transport des pièces de jardinière sont aussi facilités. A contenance de terre et/ou d'eau égale , la jardinière est moins volumineuse.

Suivant un mode de réalisation, pour séparer les étages, on prévoit une grille qui repose soit sur des parois opposées inclinées en s'évasant vers le bas du bac et/ou cette grille comporte des plots lui permettant de se reposer sur le fond du bac et /ou elle repose sur des parties en surélévation telles que des croisillons, des nervures, socles ou autre dans le fond du bac.

Suivant un mode de réalisation particulièrement utile, on prévoit de réaliser le bac de manière à ce qu'il puisse recevoir, pour réaliser le deuxième étage, un ou plusieurs pot contenant la « terre ». Dans la mesure où le bac peut contenir plusieurs pots, ceux-ci sont distincts les uns des autres, de sorte que l'on peut, dans la même jardinière, cultiver des espèces différentes et/ou des végétaux qui nécessitent des traitement différents sans que l'un porte atteinte à l'autre. Chaque végétal, en fonction des nécessités, pourra puiser dans le premier étage l'eau dont il a besoin. On peut également prévoir une ou des parois verticales à l'intérieur du deuxième étage de manière à créer des compartiments de terre séparés dans lesquels ont peut cultiver des espèces distinctes.

Par les caractéristiques de la revendication 4, on empêche le pot de basculer et on garantit ainsi la présence d'une couche d'air uniforme.

Suivant un mode de réalisation perfectionné, celui-ci prévoit en sus une jauge de niveau à indicateur apparaissant dans un hublot, qui se trouve à un niveau supérieur à celui de l'orifice. Le hublot peut être constitué par une partie transparente ou une partie ouverte de la paroi latérale de la jardinière. Il permet de connaître le niveau de l'eau dans le premier étage avant qu'elle ne déborde.

Suivant un mode de réalisation, on prévoit de réaliser la jardinière de manière à ce qu'elle puisse s'intégrer dans une soucoupe. Cette deuxième pièce, à un niveau inférieur à celui de la jardinière a pour objet de recevoir les eaux d'arrosage et/ou de pluies en excédent que la terre et le système racinaire contenu dans la jardinière (qui dispose de trous dans sa partie inférieure) n'ont pu absorber. Le fond de la jardinière constitue la grille évoquée dans le premier mode de réalisation. Ce mode de réalisation reste compatible avec le deuxième mode de réalisation dans la mesure ou la jardinière peut recevoir des pots qui reposeront sur le fond de la jardinière. Dans ce cas la partie haute de la soucoupe qui permet l'évacuation de l'eau devra rester à un niveau inférieur à celui du fond de la jardinière (ou des trous de drainage du ou des trous de drainage, du ou des pots) afin d'éviter que de l'eau remonte au niveau de la terre.

Suivant un mode de réalisation d'un grand intérêt, il n'y a qu'un seul orifice dans le bac, même s'il contient plusieurs pots. La lumière du jour, néfaste aux racines, pénètre ainsi aussi peu que possible par la couche d'air.

Les cinq figures des dessins annexés illustrent l'invention.
La figure 1 est une vue en coupe d'une jardinière suivant l'invention,
La figure 2 en est une vue de côté,
La figure 3 est une vue en coupe d'une variante,
La figure 4 est une vue en coupe d'une variante,

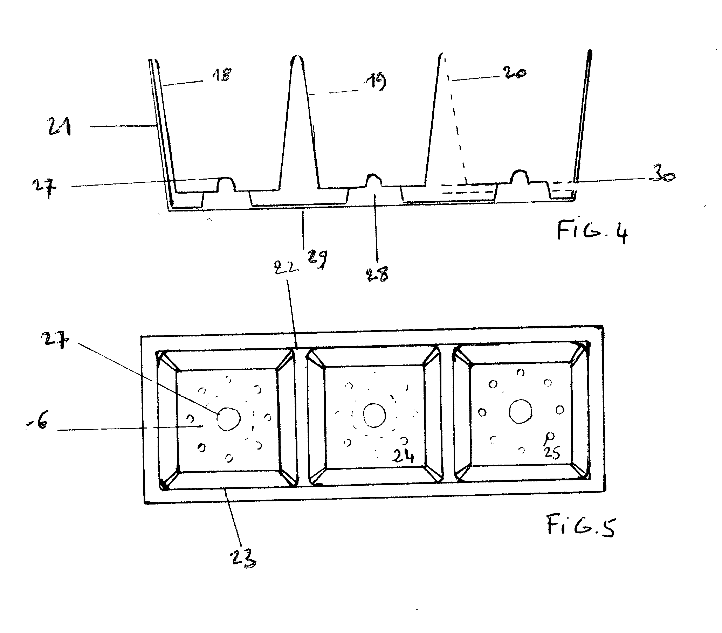

et la figure 5 est la vue en plan correspondant à la figure 4.

La jardinière moulée en matière plastique comprend un bac 1 à l'intérieur duquel il existe une grille 2 dont les mailles ont une dimension si petite qu'une couche de terre posée sur la grille ne passe pas en dessous de la grille, mais que les racines puissent y passer. Cette grille, pour séparer les étages E₁, E₂, repose soit sur les parois inclinées (3) en s'évasant vers le bas du bac (1) et/ou sur plots 5 intégrés au fond 7 de la jardinière et/ou cette même grille comporte des plots 4 lui permettant de reposer sur le fond de la jardinière.

Dans la surface latérale du bac 1 est ménagé à un niveau inférieur à celui de la grille 2, donc dans le premier étage E₁, un orifice 6 unique constamment ouvert, de sorte que de l'eau se trouvant dans la partie du bac E₁ comprise entre le fond 7 et la grille 2 ne puisse remonter au-dessus de celle-ci et passer dans la terre T, soit dans E₂, mais s'écoule nécessairement par l'orifice 6, dès que le niveau s'élève trop.

Pour prévenir un débordement de l'eau 17 contenue dans l'espace E₁, compris entre le fond 7 et la grille 2, il est prévu une jauge de niveau comportant essentiellement un flotteur 8 monté basculant sur un axe 9 fixé au fond 7. Le flotteur 8 comporte une patte colorée 10 qui vient en regard d'un hublot 11 lorsque le niveau de l'eau dans l'espace compris entre le fond 7 et la grille 2 menace de venir au-delà du niveau de l'orifice 6. On sait ainsi que l'eau dans la jardinière menace de déborder et qu'il vaut mieux arrêter d'arroser pour ne pas mouiller un plancher. Mais néanmoins, si l'on passe outre, l'eau déborde et ne peut pas remonter dans la terre T du deuxième étage E₂.

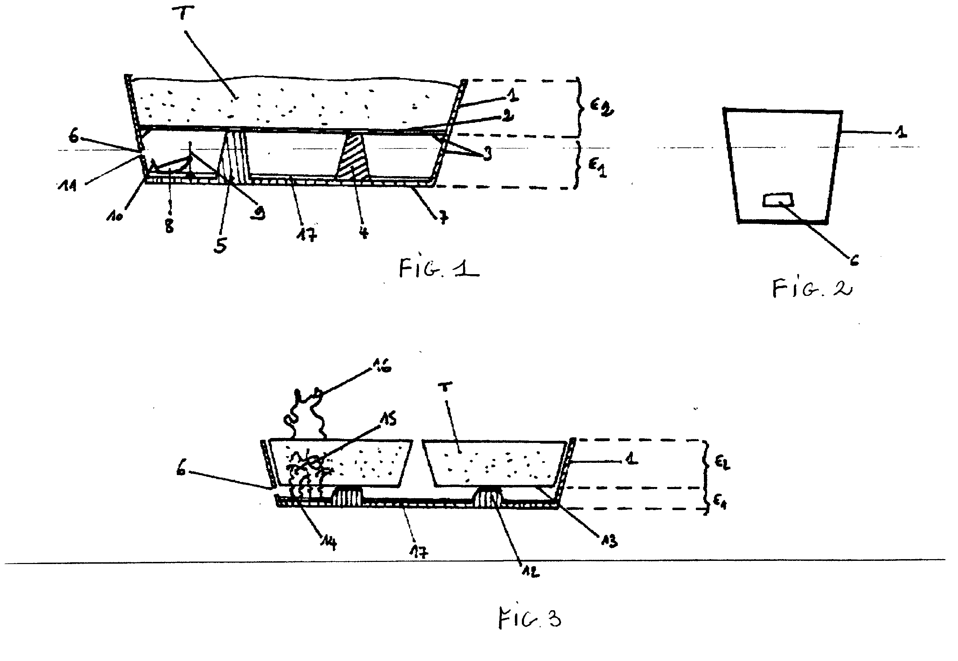

Le mode de réalisation de la figure 3 diffère du précédent par le fait que le bac contient un ou plusieurs pots 13 qui reposent sur des socles 12 issus du fond du bac et dont les fonds définissent les étages E₁ et E₂. Des trous aménagés dans les fonds des pots permettent :
- Le passage de l'extrémité 14 du système racinaire 15 du végétal 16. -
- Le passage de l'eau d'arrosage et/ou de pluie 17 en excédent de l'espace E₂ dans l'espace E₁.

A la figure 4, trois pots 18, 19, 20 à sommet carré ou rectangulaire, la base étant plus petite que le sommet, sont placés côte-à-côte dans un bac 21 à sommet et à base rectangulaire, la base étant plus petite que le sommet. Deux bords supérieurs 22, 23 opposés des pots 18, 19, 20 sont en contact avec le bac 21. Les fonds (24) sont percés de trous (25). Dans le fond 24 de Deux bords supérieurs 22, 23 opposés des pots 18, 19, 20 sont en contact avec le bac 21. Les fonds (24) sont percés de trous (25). Dans le fond 24 de chaque pot 18, 19, 20 est ménagé au milieu un évidemment 26 conique dans lequel pénètre une saillie 27 tronconique de forme complémentaire issue de la face supérieure d'un plot 28 lui-même issu du fond 29 du bac 21. Un orifice (30) est ménagé dans le bac 21 à un niveau inférieur aux fonds 24.

## Revendications

1. Jardinière, de préférence en matière plastique, comprenant dans un bac (1) des moyens (2, 13) perforés délimitant dans le bac (1) un deuxième étage (E₂) destiné à contenir de la terre de culture et un végétal et un premier étage (E₁), juste en dessous du deuxième étage (E₂), destiné à recevoir l'eau drainée en excédent du deuxième étage (E₂) et un orifice (6) constamment ouvert ménagé dans la paroi du bac (1) dans le premier étage (E₁) de manière à ce que de l'eau s'y trouvant ne puisse pas remonter dans le deuxième étage (E₂) autrement que par le système racinaire du végétal, **caractérisée en ce que** les moyens (2, 13) perforés sont supportés par un support (4, 5, 12, 3) ou allant du fond (7, 14) du bac aux moyens (2) perforés.

2. Jardinière suivant la revendication 1, **caractérisée en ce que** les moyens (2) perforés comprennent une grille (2) ou le fond perforé d'un pot (13) de terre, tandis que le support (4) est une partie (5, 12) en surélévation issue du fond (7) du bac (1) ou une partie (4) issue de la grille (2) ou du fond du pot (13) et allant jusqu'au fond (7 ).

3. Jardinière suivant la revendication 2, **caractérisé en ce que** le bac (1) s'évase vers le haut et la partie (4, 5, 12) s'évase vers le bas .

4. Jardinière suivant l'une des revendications 1 à 3, **caractérisée en ce que** les moyens perforés comprennent le fond (24) perforé d'un pot (18) de terre et le fond perforé du pot (18) de terre comporte une partie de guidage (27) coopérant par complémentarité de forme avec une partie de centrage (26) du support (28) la partie de centrage étant par exemple une conformation à évidement dans lequel pénètre un cône de centrage du support, tant le pot que le bac étant de dépouille.

5. Jardinière suivant l'une des revendications 2 à 4, **caractérisée en ce que** le bord supérieur d'une paroi du pot est en contact avec le haut du bac.

6. Jardinière suivant l'une des revendications 1 à 5, **caractérisée en ce qu'**il n'y a qu'un seul orifice (6).

7. Jardinière suivant l'une des revendications 2 à 6, **caractérisée en ce que** le bac (1) contient plusieurs pots.
